Europäisches Patentamt

European Patent Office

Office européen des brevets

(11) Publication number: **0 429 110 A1**

## EUROPEAN PATENT APPLICATION

(21) Application number: 90202822.4

(22) Date of filing: 22.10.90

(51) Int. Cl.5: **F16D 66/00**

(30) Priority: 26.10.89 GB 8924144

(43) Date of publication of application:
29.05.91 Bulletin 91/22

(84) Designated Contracting States:
BE DE DK ES FR IT NL SE

(71) Applicant: FERODO ABEX SA formerly ABEX
EQUIPEMENTS SA
58 Rue Juliette-Adam, BP 20
F-91192 Gif-sur-Yvette(FR)

(72) Inventor: Tudor, John Malcolm
Thornlea, Mount Drive
Oswestry, Shropshire SY11 1BD(GB)

(74) Representative: Goddard, David John et al
Bowdon House Ashburton Road West
Trafford Park
Manchester M17 1RA(GB)

(54) Brake lining identification.

(57) A method for the identification of vehicle brake linings is described in which a series of depressions (12, 14, 16, 18) is formed in the edge or edges of the lining (10) substantially parallel to the braking surface (20), the means of identification arising from a predetermined code, corresponding to the origin and type of the lining, produced by varying any one or more of the number, shape, spacing, cross-sectional area and/or depth of the depressions. The code is read by means of a checking device (30) having fingers or spigots (32) corresponding to the series of depressions and which may be inserted into the depressions whilst the lining is in situ on the vehicle.

FIG.1

# BRAKE LINING IDENTIFICATION

This invention relates to vehicle brake linings and in particular to a means for the in situ identification of such brake linings.

It is desirable to be able to identify both the origin of manufacture and grade of material used in brake linings, in commercial vehicles for instance.

Legislation introduced in some countries requires that vehicles, and in particular commercial vehicles, be fitted with brake linings incorporating a specific grade of lining material which has been validated for the vehicle.

At present the usual method of identifying the origin and type of brake linings is by marking the lining with paint, ink or some other similar material.

Problems associated with such identification methods include short lifetime of the markings which often disappear during the operating life of the lining, and also the inability to check the markings in situ; that is without removing the vehicle wheel and brake drum.

It is an object of the present invention to provide a means for the identification of vehicle brake linings in situ, which means of identification also remains intact throughout the operating lifetime of the lining.

According to the present invention a method for the identification of vehicle brake linings is characterised by the formation of a series of depressions in the edge or edges of the lining substantially parallel to the braking surface, the means of identification arising from a predetermined code, corresponding to the origin and type of the lining, produced by varying any one or more of the number, shape, spacing, cross-sectional area and/or depth of the depressions, said code being read by means of a checking device having fingers or spigots corresponding in depth, shape, cross-sectional area, number and spacing to the depressions in the lining, the checking device being inserted into the depressions in the lining through an access hole in the brake assembly, such as, for example, in the brake back-plate or the brake drum.

The depressions are advantageously formed in the lining edge(s) below the level of the heads of the retaining rivets thus ensuring that the depressions are not worn away during the lifetime of the lining.

In one embodiment of the invention the depressions may be holes which can be formed by drilling into the lining edge(s).

In a further embodiment of the invention the depressions may be recesses formed during moulding of the lining and may be of any desired shape or shapes.

The cross-sectional area of the depressions may be constant throughout the whole length of any individual depression or it may vary, becoming smaller as the depression is progressed into the lining material.

Such depressions may also be formed, either by moulding or machining, in one or both of the lining ends parallel to the axis of rotation, to allow identification of the linings whilst in storage or in any situation where the lining edges are not visible.

The invention will now be more fully described, by way of illustration only with reference to the accompanying drawings of which:-

Figure 1 shows a brake lining having holes in its edge for practising the method of the present invention.

Figure 2 shows a circumferential section, along the line A-A in Figure 1, through a brake lining according to the present invention.

Figure 3 shows a checking device for checking the lining of Figure 1.

Figure 4 is a view through the inspection hole in a brake back plate showing a brake shoe and lining, for practising the method of the present invention.

Figure 5 shows a brake lining having recesses in its edge for practising the method of the present invention.

Referring now to the drawings and where the same features are denoted by common reference numbers:

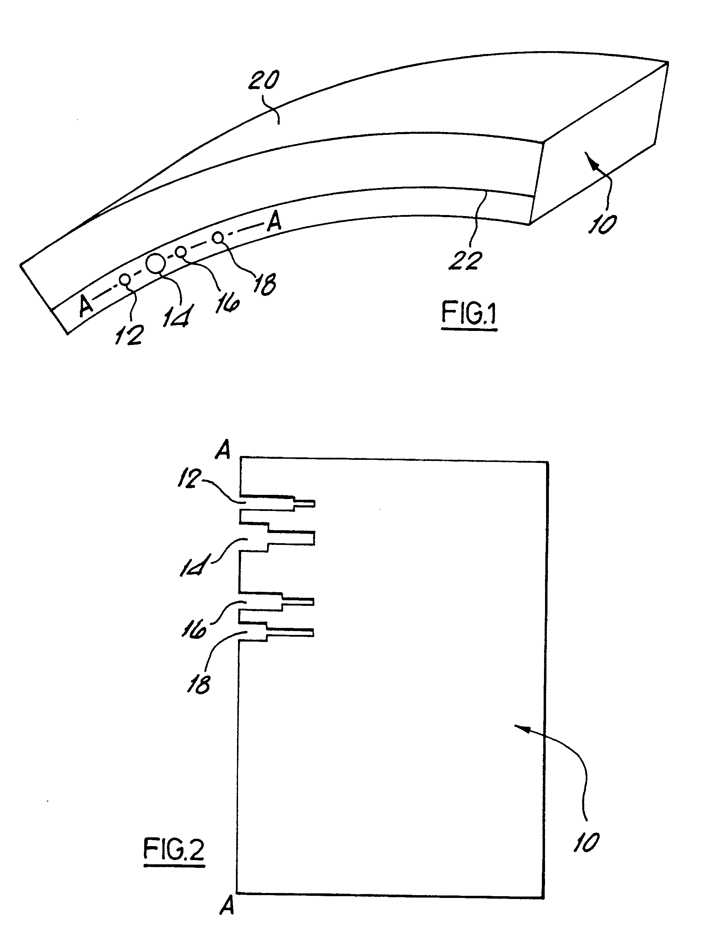

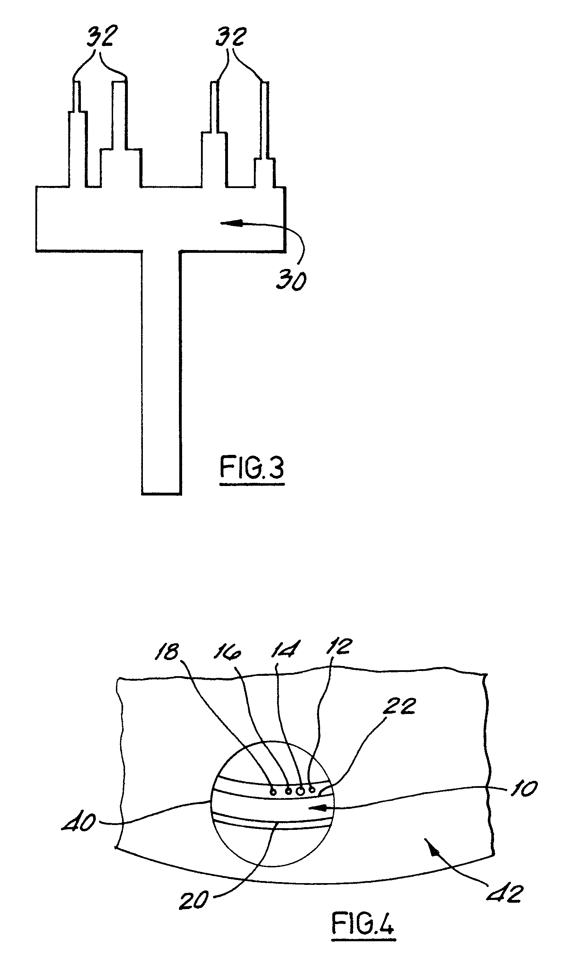

Figure 1 shows a brake lining 10 having holes 12, 14, 16 and 18, of different diameters, in its edge, substantially parallel to the braking surface 20 and below the level, denoted by the line 22, of the heads of the retaining rivets, said holes having different spacing and lengths as shown in Figure 2, the hole sizes, spacing and length being predetermined in order that the fingers or spigots 32 of the checking device 30, shown in Figure 3, may be inserted into the lining holes through an inspection hole 40 in a brake back plate 42, as shown in Figure 4, whilst the brake lining is in situ in the vehicle and thereby verify the origin and type of the brake lining.

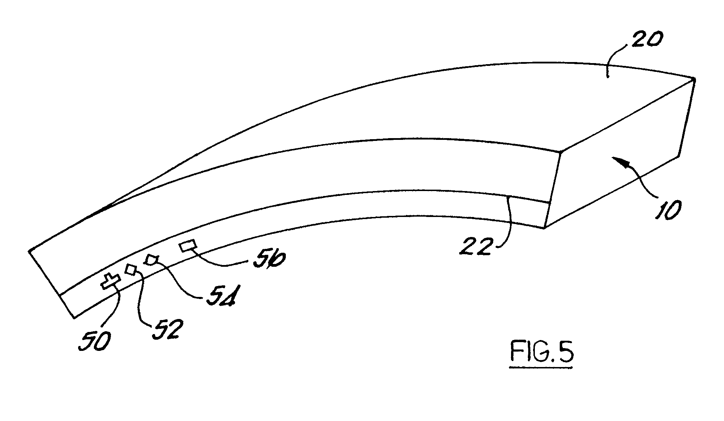

Figure 5 shows a brake lining 10 substantially as shown in Figure 1 but having recesses 50, 52, 54 and 56 of varying size, shape and cross-sectional area moulded into its edge, substantially parallel to the braking surface 20 and below the level, denoted by the line 22, of the heads of the retaining rivets.

**Claims**

1. A method for the identification of vehicle brake linings, characterised by the steps of forming depressions (12, 14, 16, 18) in the edge or edges of the lining (10) substantially parallel to the braking surface (20), the means of identification arising from a predetermined code, corresponding to the origin and type of the lining, produced by varying any one or more of the number, shape, spacing, cross-sectional area and/or depth of the depressions, said code being read by means of a checking device (30) having fingers or spigots (32) corresponding to the depressions in the lining.

2. A method, according to claim 1, for the identification of vehicle brake linings characterised in that the depressions are formed in the lining below the level of the heads of the retaining rivets used to secure the linings to cooperating brake shoes.

3. A method for the identification of vehicle brake linings according to claims 1 or 2 characterised in that the depressions are holes.

4. A method for the identification of vehicle brake linings according to claims 1 or 2 characterised in that the depressions are recesses formed during moulding of the lining.

5. A method for the identification of vehicle brake linings according to any one preceding claim characterised in that the cross-sectional area of the depressions remains constant throughout the whole length of any individual depression.

6. A method for the identification of vehicle brake linings according to any one of claims 1 to 4 characterised in that the cross-sectional area of a depression varies, becoming smaller as the depression progresses into the lining material.

7. A method for the identification of vehicle brake linings according to any one preceeding claim characterised in that the checking device may be inserted in the depressions via an access hole (40) in the brake assembly on a vehicle.

FIG.1

FIG.2

32    32

30

FIG.3

18  16  14  12

22

40

10

20

42

FIG.4

FIG.5

EP 0 429 110 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-2555032 (IDENTA) <br> --- | | F16D66/00 |
| A | DD-A-210818 (STARKSTROM ANLAGENBAU) <br> ----- | | |

TECHNICAL FIELDS
SEARCHED (Int. Cl.5 )

F16D

The present search report has been drawn up for all claims

| Place of search | Date of completion of the search | Examiner |
|---|---|---|
| BERLIN | 30 JANUARY 1991 | LUDWIG H.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)